(19) Europäisches Patentamt
European Patent Office
Office européen des brevets

(11) **EP 1 158 312 B1**

(12) **FASCICULE DE BREVET EUROPEEN**

(45) Date de publication et mention
de la délivrance du brevet:
**30.07.2008   Bulletin 2008/31**

(51) Int Cl.:
***G01V 11/00*** *(2006.01)*

(21) Numéro de dépôt: **01401188.6**

(22) Date de dépôt: **10.05.2001**

(54) **Méthode pour modéliser des écoulements dans un milieu fracturé traversé par de grandes fractures**

Methode zur Modellierung von Strömungen in einem mit grossen Brüchen versehenen Bruchsystem

Modelling method for fluids in a fractured environment which is traversed by large fractures

(84) Etats contractants désignés:
**GB IT NL**

(30) Priorité:  **26.05.2000   FR 0006874**

(43) Date de publication de la demande:
**28.11.2001   Bulletin 2001/48**

(73) Titulaire: **Institut Français du Pétrole**
**92852 Rueil-Malmaison Cedex (FR)**

(72) Inventeurs:
 • **Manceau, Emmanuel**
   **92500 Rueil-Malmaison (FR)**
 • **Sarda, Sylvain**
   **92500 Rueil-Malmaison (FR)**
 • **Consentino, Luca**
   **78170 La Celle Saint Cloud (FR)**
 • **Cacas, Marie-Christine**
   **92500 Rueil-Malmaison (FR)**
 • **Bourbiaux, Bernard**
   **92500 Rueil-Malmaison (FR)**

(56) Documents cités:
   **FR-A- 2 757 947        FR-A- 2 757 957**

## Description

La présente invention concerne une méthode pour modéliser des écoulements de fluides dans un milieu fissuré traversé par des fractures relativement grandes, au sens que l'on va préciser ci-après.

La méthode peut être mise en oeuvre par exemple dans le domaine de la production pétrolière par des ingénieurs de gisement en vue d'obtenir des prédictions d'écoulement fiables dans des réservoirs pétroliers comportant des discontinuités structurales ou sédimentaires dont les propriétés d'écoulement sont contrastées par rapport au milieu encaissant.

Par cette modélisation, il s'agit de simuler des écoulements dans un milieu poreux perméable (réservoir) traversé par un réseau de fissures et/ou de couches fines beaucoup plus conductrices que la matrice poreuse. Les réservoirs fissurés constituent un type extrême de réservoirs hétérogènes comportant deux milieux contrastés, un milieu matriciel contenant la plus grande part de l'huile en place et présentant une faible perméabilité, et un milieu fissuré représentant moins de 1% de l'huile en place et hautement conducteur. Le milieu fissuré lui-même peut être complexe, avec différents ensembles de fissures caractérisés par leur densité, longueur, orientation, inclinaison et ouverture respectives.

Dans un réservoir en production, les conditions de pression et de débit imposées aux puits producteurs et injecteurs induisent des écoulements des fluides en place dans le réservoir (huile, gaz et eau). La simulation de ces écoulements consiste à déterminer l'évolution des pressions et des saturations dans le réservoir au cours du temps. De par la nature très hétérogène des réservoirs fracturés, les fluides se déplacent relativement vite au travers du réseau de fractures et beaucoup plus lentement dans la matrice. La simulation d'écoulements dans le contexte d'un réservoir fracturé nécessite donc une très bonne représentation des hétérogénéités majeures que constituent les fractures. La précision de cette représentation dépend du type de simulation mise en oeuvre et de la taille des fractures à modéliser. Ainsi, pour une simulation très précise d'un essai de puits, on sera amené à représenter la géométrie exacte du réseau de fractures. A l'inverse, pour la prise en compte d'un réseau dense de petites fractures à l'échelle d'un champ, on cherchera une représentation simplifiée équivalente.

La présente invention permet de simuler précisément les écoulements à l'échelle d'un champ en présence de nombreuses grandes fractures.

## ETAT DE LA TECHNIQUE

Actuellement dans l'industrie pétrolière notamment, on utilise les modèles à double porosité (double milieu) pour simuler les écoulements dans des milieux fracturés, mais ils sont appliqués non au milieu géologique réel dans toute sa complexité mais à une représentation homogénéisée, suivant le modèle de réservoir dit de double milieu décrit par exemple par Warren et Root, dans « The Behavior of Naturally Fractured Reservoirs », SPE Journal, 1963. Tout volume élémentaire du réservoir fissuré est considéré comme constitué de deux milieux homogènes équivalents à l'échelle de la maille du simulateur : un milieu fissure et un milieu matrice. L'écoulement des fluides à l'échelle du réservoir s'effectue principalement à travers le milieu fissure et des échanges de fluides surviennent localement entre les fissures et les blocs matriciels. Cette représentation qui ne rend pas compte de la complexité du réseau de fractures dans un réservoir, se révèle efficace néanmoins à l'échelon d'une maille de réservoir ayant typiquement pour dimensions 100m x 100m. La modélisation en double milieu permet de reproduire le comportement à l'écoulement des deux milieux et leurs interactions sans pour autant devoir recourir à une modélisation explicite des deux milieux.

Par le brevet FR-A-2.757.947 (US 6 023 656) du demandeur, on connaît une technique de détermination de la perméabilité de fissure équivalente d'un réseau de fissures dans un milieu multi-couche souterrain à partir d'une représentation connue de ce réseau. Elle permet de relier de manière systématique des modèles de caractérisation de réservoir fissuré à des simulateurs double porosité en vue de réaliser une modélisation plus réaliste d'une structure géologique souterraine fissurée.

Par le brevet FR-A-2.757.957 du demandeur, on connaît une technique pour obtenir une modélisation simplifiée d'un milieu géologique hétérogène poreux (tel qu'un réservoir traversé par un réseau irrégulier de fissures par exemple) sous la forme d'un milieu transposé ou équivalent de manière à ce que le milieu transposé soit équivalent au milieu d'origine, relativement à un type déterminé de fonction de transfert physique (connu pour le milieu transposé).

Par la demande de brevet FR 98/15.727 du demandeur, on connaît également une méthode pour modéliser les flux de fluides dans un milieu poreux multi-couches fissuré en tenant compte de la géométrie réelle du réseau de fissures et des échanges locaux entre la matrice poreuse et les fissures en chaque noeud du réseau. On discrétise le milieu fissuré par un maillage, on centre les mailles de fissure sur des noeuds aux différentes intersections des fissures, chaque noeud étant associé à un volume de matrice, et l'on détermine les flux entre chaque maille de fissure et le volume de matrice associé dans un régime de flux semi-permanent.

Il existe des cas où les techniques précédentes sont difficiles à mettre en oeuvre, où l'on se trouve en présence d'un milieu traversé par de grandes fractures ou failles sub-sismiques dont le comportement hydraulique n'est pas homogénéisable à l'échelle de la maille. Une modélisation explicite de ces objets est alors nécessaire a priori mais leur nombre trop élevé rendrait une telle approche prohibitive à l'échelle d'un champ (nombre de mailles trop élevé et contraintes numériques). Le même problème se pose pour des réservoirs renfermant des bancs minces et très perméables dont le comportement s'apparente à celui de grandes fractures horizontales.

**La méthode selon l'invention**

La méthode de modélisation selon l'invention permet de simuler des écoulements de fluides dans un milieu géologique poreux fissuré de structure connue que l'on discrétise par un maillage et que l'on modélise en considérant que chaque volume élémentaire du milieu géologique fissuré est constitué d'un milieu fissure et d'un milieu matrice équivalents à l'échelle de chaque maille entre lesquels on détermine les échanges de fluides, ce milieu géologique étant traversé par un réseau de d'objets conducteurs de fluides de géométrie définie mais non homogénéisables à l'échelle de chaque maille du modèle (des grandes fractures, des failles sub-sismiques par exemple, des couches sédimentaires très perméables, etc.). La méthode comporte une détermination des échanges intervenant entre le milieu matrice et le milieu fissure, et une modélisation des transmissivités des différentes mailles traversées par chaque objet conducteur, de façon que la transmissivité résultante corresponde à la transmissivité directe le long de cet objet conducteur.

Dans le cas où les objets conducteurs sont des couches sédimentaires très perméables, on attribue à la transmissivité entre mailles traversées par chaque couche très perméable une valeur dépendant des dimensions des mailles et de l'aire de contact commune entre couches à la jonction des mailles adjacentes.

Dans le cas où les objets conducteurs sont des fractures, on attribue à la transmissivité entre mailles traversées par chaque fracture, une transmissivité dépendant des dimensions des mailles et de l'aire commune de la fracture à la jonction des mailles adjacentes.

Dans toutes les mailles traversées par des objets conducteurs géométriquement définis (blocs matriciels de formes et de tailles irrégulières), on détermine un milieu transposé comportant un ensemble de blocs régulièrement disposés et séparés par un maillage régulier de fissures donnant sensiblement la même fonction de récupération de fluide lors d'un processus d'imbibition capillaire que le milieu réel. On calcule la dimension verticale des blocs du milieu transposé à partir des positions des couches sédimentaires très perméables dans la maille et on obtient les dimensions horizontales des blocs de ce milieu transposé, à partir d'une image à deux dimensions (2D) du milieu géologique sous la forme d'une série de pixels, par :

- la détermination, pour chaque pixel, de la distance minimale qui le sépare de la fissure la plus proche ;

- la formation d'une distribution du nombre de pixels par rapport à la distance minimale au milieu fissuré et la détermination, à partir de cette distribution, de la fonction de récupération (R) dudit ensemble de blocs ; et

- la détermination de dimensions des blocs réguliers équivalents du milieu transposé à partir de la récupération (R) et de la récupération du bloc équivalent.

**Présentation des figures**

D'autres caractéristiques et avantages de la méthode selon l'invention, apparaîtront à la lecture de la description ci-après d'un exemple non limitatif de réalisation, en se référant aux dessins annexés où :

- la Fig.1 montre schématiquement deux mailles adjacentes d'une même couche d'un maillage de réservoir où la présence de niveaux sédimentaires fins et très perméables induit une transmissivité horizontale dans le milieu « fissure » ;

- la Fig.2 montre un maillage de réservoir traversé par un réseau de fissures ;

- la Fig.3 montre des mailles O, A, B, C d'un réservoir traversée par une fissure que l'on modélise par des transmissivités fissure-fissure ;

- la Fig.4 illustre le mode de calcul de la transmissivité entre deux mailles A et B traversées par une fissure ;

- la Fig.5 montre par comparaison le trajet en marches d'escalier au travers de mailles traversées par une fracture oblique, que l'on prend en compte pour les besoins de la simulation, et dont la transmissivité, selon le mode de calcul choisi, est cependant équivalente à la transmissivité réelle directement le long de la fracture ; et

- la Fig.6 illustre le mode de calcul de la taille d'un bloc équivalent en fonction du nombre de niveaux sédimentaires très perméable traversant une maille ;

- la Fig.7 présente un exemple de pixels voisins servant au calcul de la valeur attribuée à un pixel ; et

- la Fig. 8 présente une variation possible d'une zone envahie normée en fonction de la distance aux fissures.

**DESCRIPTION DETAILLEE**

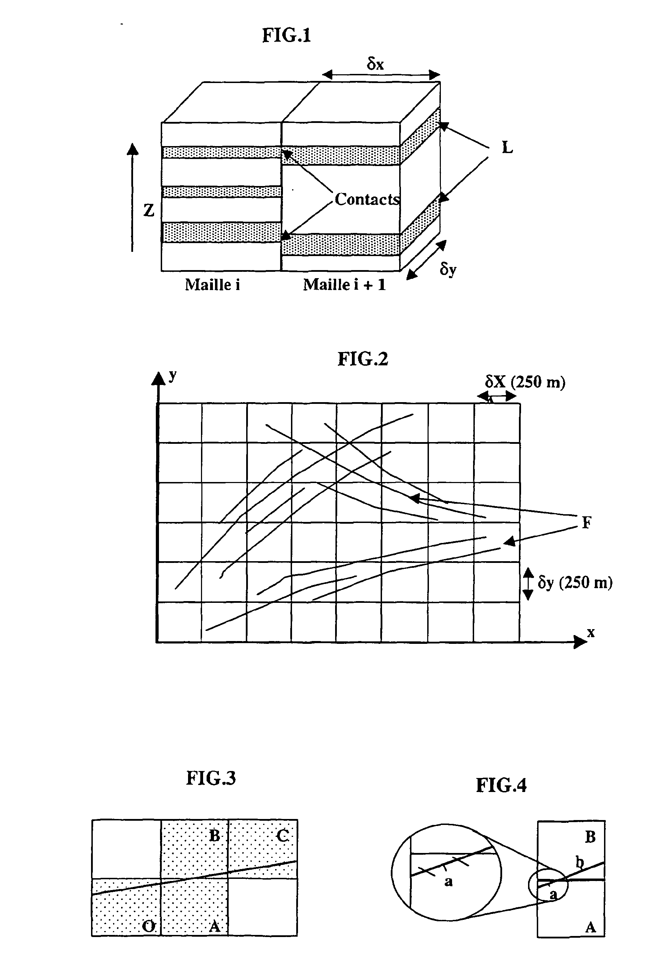

On va considérer ci-après l'exemple d'un réservoir poreux traversé par un réseau de fractures F (Fig.2) que l'on suppose verticales pour simplifier et par des niveaux sédimentaires fins (sub-horizontaux) L (Fig.1) dont les propriétés pétrophysiques (perméabilité notamment) sont contrastées par rapport à l'encaissant matriciel. Ce réservoir est modélisé sous forme de deux grilles « superposées » (modèle double milieu), l'une d'elles, qualifiée de « matrice », représentant l'encaissant matriciel, l'autre, qualifiée de « fissure », représentant l'ensemble des discontinuités considérées (fractures et niveaux fins perméables). Les écoulements sont calculés au sein respectivement de la grille matrice et de la grille fissure ; de plus, des termes d'échange relient les inconnues de chaque couple de mailles matrice et fissure du modèle au moyen de formulations adaptées. La méthode qui va être décrite permet de calculer les transmissivités entre mailles « fissure» et les échanges « matrice-fissure ». Les échanges entre les mailles matrice sont calculées de manière standard bien connue des gens de l'art.

**I-Transmissivités entre mailles « fissure »**

**I-1 Transmissivités associées aux niveaux sédimentaires fins et perméables**

Les niveaux sédimentaires fins et perméables sont inclus dans le milieu « fissure » du modèle double milieu. Dans une maille traversée par de tels niveaux sédimentaires, les propriétés pétrophysiques de ces niveaux (porosité, perméabilité, saturation en eau) sont affectées au milieu fissure de la maille et les propriétés du reste de la roche contenue dans la maille sont affectées au milieu matrice de la même maille.

La présence de niveaux sédimentaires fins et très perméable dans deux mailles adjacentes induit une transmissivité horizontale dans le milieu « fissure » entre les deux mailles (transmissivité « fissure-fissure »). Le schéma de la Fig.1 montre deux mailles adjacentes (dans la même couche du maillage réservoir) contenant de tels niveaux. On note qu'il n'y a pas de transmissivité verticale « fissure-fissure » induite puisque les niveaux sont horizontaux.

Dans cet exemple, la transmissivité horizontale « fissure-fissure » entre les mailles i et i+1 est calculée comme suit :

$$Ts_{i,i+1} = \frac{Ks \cdot Es_{i,i+1} \cdot \Delta Y}{\Delta X} ,$$

où Ks est la perméabilité des niveaux sédimentaires très perméables,

    ● Y est la taille des mailles en Y,
    ● X est la taille en X, et

$Es_{i,i+1}$ est l'épaisseur des contacts entre niveaux sédimentaires fins et très perméables des deux mailles adjacentes i et i+1.

Cette épaisseur est nulle si les niveaux des deux mailles ne sont pas connectés. A l'inverse, s'ils sont totalement connectés, elle peut être égale à la plus petite des épaisseurs cumulées de niveaux dans les deux mailles.

**I-2 Transmissivités associées aux fractures**

Le réseau de fractures verticales est aussi pris en compte dans le milieu « fissure » de l'approche double milieu. Dans chaque couche du modèle réservoir (Fig.2), ce réseau peut être représenté par une série de segments fissure qui traversent le maillage réservoir, comme sur le schéma suivant :

Les données relatives à ces segments fissure sont :

- la perméabilité fissure Kf,
- l'épaisseur de la fissure Ef, et
- la longueur de fissure Lf.

La porosité de fissure $\Phi$f, calculée par la formule suivante :

$$\Phi f = \frac{Lf \cdot Ef}{\Delta X \cdot \Delta Y}$$

La communication entre les mailles du réservoir à travers le réseau de fractures est modélisée par des transmissivités fissure-fissure. Sur l'exemple de la Fig.3, des transmissivités fissure-fissure sont calculées entre les mailles traversées par la fracture, c'est à dire pour les couples O et A, A et B et B et C : $T_{FOA}$, $T_{FAB}$ et $T_{FBC}$.

Cet exemple montre que le chemin réel d'un flux à travers une fracture peut être éloigné du trajet imposé par la modélisation qui passe par les centres des mailles O, A, B et C. La solution qui consisterait à remplacer le segment de fracture par une ligne brisée passant par les centres de mailles conduirait à une mauvaise simulation des flux à travers ces mailles.

Aussi, on détermine la transmissivité horizontale « fissure-fissure » entre deux mailles traversées par la même fracture (cf. Fig.4), comme suit :

$$T_{fAB} = Kf \cdot Ef \cdot \frac{\Delta Z}{L_{ab}}$$

où :

Kf est la perméabilité intrinsèque de la fracture,
Ef est l'épaisseur de la fracture,
$\Phi$Z est l'épaisseur de la couche,
$L_{ab}$ est la longueur du segment ab,
a est le milieu du segment de fracture traversant la maille A, et
b est le milieu du segment de fracture traversant la maille B

On note que plus la longueur $L_{ab}$ est petite, plus la transmissivité « fissure-fissure » entre les mailles A et B est grande. Ainsi, on corrige numériquement l'effet de grille qui impose un chemin en marches d'escalier au flux.

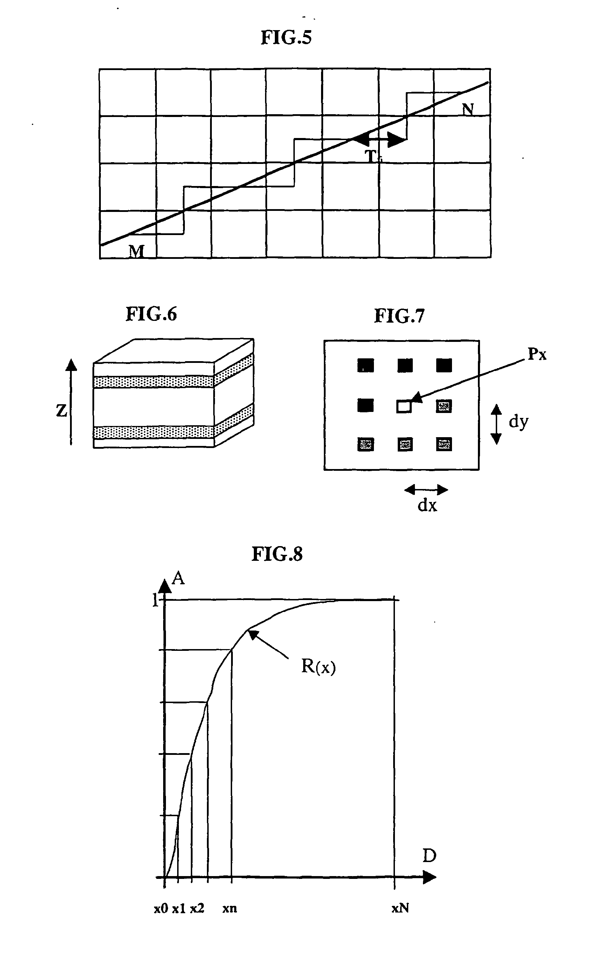

Ainsi le flux entre deux mailles distantes reliées par une fracture peut être correctement simulé en dépit du trajet en escalier (Fig.5) imposé par la grille. En effet, sur l'exemple de la Fig. 5, on peut vérifier que :

$\sum \frac{1}{T_{fi}} = \frac{1}{T_{fMN}}$ où les $T_{fi}$ sont les transmissivités « fissure-fissure » entre mailles réservoir cartésiennes le long du trajet en marches d'escalier reliant M et N, et $T_{fMN}$ est la transmissivité réelle de la fracture entre M et N.

Concernant la perméabilité verticale « fissure-fissure » induite par la présence d'une fracture traversant plusieurs couches du réservoir, on a :

$$T_{fv} = Kf \cdot Ef \cdot \frac{Lf}{\Delta Z}$$

où:

Kf est la perméabilité intrinsèque de la fracture,
Ef est l'épaisseur de la fracture,

●Z est l'épaisseur de la couche,

L_f est la longueur du segment de fracture dans la maille considérée.

Enfin, quand plusieurs fractures traversent une maille, les transmissivités calculées pour ces fractures prises individuellement sont ajoutées.

**I-3 Transmissivité résultante**

Les transmissivités relatives aux niveaux sédimentaires très perméables ($T_s$) et les transmissivités relatives aux fracture ($T_f$) sont calculées séparément suivant les méthodes exposées précédemment. Les transmissivités « fissure-fissure » du modèle double milieu final sont calculées simplement par addition des $T_s$ et $T_f$.

De même, la porosité finale du milieu « fissure » dans chaque maille est la somme des porosités dues aux niveaux sédimentaires très perméables d'une part et aux fractures d'autre part.

**II- Dimensions de bloc matriciel équivalent**

**II-1 Dimensions horizontales**

Les dimensions horizontales du bloc équivalent (a,b) sont contrôlées par les fractures verticales présentes dans le réservoir. En effet, les échanges « matrice-fissure » dues aux fractures verticales sont uniquement horizontaux.

Dans chaque maille traversée par au moins une fracture, ces dimensions horizontales sont calculées par la méthode décrite dans le brevet FR 2.757.957 précité. Pour les mailles dans lesquelles il n'y a pas de fracture, les dimensions horizontales de bloc équivalent sont infinies. Pratiquement, on leur affecte une valeur très grande (par exemple 10 km). Selon cette méthode on détermine les dimensions de bloc équivalent par identification des comportements du milieu fracturé réel et du milieu équivalent pour un mécanisme d'imbibition diphasique eau-huile. Cela consiste en la mise en adéquation de la fonction de récupération d'huile R(t) (du milieu fracturé réel) obtenue par une méthode de traitement d'image (décrite plus bas) et de la fonction de récupération Req(t) du milieu équivalent dont l'expression analytique est connue et dépend des dimensions du bloc équivalent.

**II-1-a) Formulation géométrique**

Les fissures étant définies par les coordonnées de leurs points limites sur une coupe bidimensionnelle XY d'une couche, le processus d'imbibition par lequel de l'eau est présente dans les fissures et de l'huile est présente dans les blocs matriciels doit être déterminé. On suppose que l'invasion de la matrice par de l'eau est du type piston. On admet que la fonction x=f(t) qui relie l'avancée du front d'eau au temps est la même pour tous les blocs matriciels, quelle que soit leur forme, et pour tous les blocs élémentaires. Par conséquent, la mise en adéquation des fonctions R(t) et Req(t) équivaut à la mise en adéquation des fonctions R(x) et Req(x). Ces fonctions définissent physiquement des zones normées envahies par l'eau en fonction de l'avancée du front d'imbibition dans le milieu fissuré.

En 2D, l'expression analytique de Req(x) est la suivante :

$$\begin{cases} \left\{ \operatorname{Re}q(x) = 1 - \frac{1}{a \times b}(a - 2x)(b - 2x) = 2\left(\frac{1}{a} + \frac{1}{b}\right)x - \frac{4}{a \times b}x^2, \quad x \in \left[0, \min\left(\frac{a}{2}, \frac{b}{2}\right)\right] \right. \\ \operatorname{Re}q(x) = 1, \quad x > \min\left(\frac{a}{2}, \frac{b}{2}\right) \end{cases}$$

où a et b sont les dimensions du bloc rectangulaire ou carré équivalent (a et b > 0) :

La fonction R(x) n'a pas d'expression analytique. Elle est calculée à partir d'une discrétisation de la coupe XY de la couche étudiée suivant l'algorithme défini ci-après.

**II-1-b) Algorithme de calcul de la fonction R(x)**

La coupe XY de la couche étudiée est considérée comme une image dont chaque pixel représente un élément de surface. Ces pixels sont espacés régulièrement d'un pas dX dans la direction X et dY dans la direction Y (Fig.7).

L'algorithme mis en oeuvre vise à déterminer, pour chaque pixel de cette image, la distance minimale qui le sépare de la fissure la plus proche.

L'image est traduite par un tableau de nombres réels à deux dimensions : Pict[0 :nx+1,0 :ny+1] où nx et ny sont les nombres de pixels de l'image dans les directions X et Y. En pratique, le nombre total de pixels (nx.ny) est par exemple de l'ordre du million. Les valeurs des éléments du tableau Pict sont les distances recherchées.

**Initialisation :** Tous les pixels par lesquels passe une fissure sont à une distance nulle de la fissure la plus proche. Pour ces pixels, le tableau Pict est donc initialisé à la valeur 0. Ceci est fait par un algorithme connu en soi (l'algorithme de Bresline par exemple) auquel on donne les coordonnées des pixels correspondants aux deux extrémités d'une fissure considérée comme un segment de droite et qui initialise (à 0 dans le cas présent) les pixels les plus proches. Les autres éléments de Pict sont initialisés à une valeur supérieure à la plus grande distance existant entre deux pixels de l'image. Cette valeur est par exemple nx.dX +ny.dY.

**Calcul :** Pour un pixel donné, le calcul de la distance recherchée à la fissure la plus proche se fait à partir des valeurs de distance déjà calculées pour les pixels voisins. On lui affecte une valeur qui, si elle s'avère inférieure à la valeur qui lui a été assignée initialement, est le minimum des valeurs des pixels voisins auxquelles on ajoute la distance de ces pixels à celui considéré.

Ce calcul est réalisé en deux phases successives. Lors de la passe descendante, on parcourt l'image ligne par ligne, de haut en bas et de gauche à droite (de Pict [1,1] à Pict [nx,ny]). Les pixels dont on tient compte sont différents selon que l'on est dans une passe descendante ou une passe montante. Comme le montre la Fig. 7, les pixels en noir et en grisé sont ceux que l'on prend en compte respectivement durant les passes descendantes et les passes ascendantes, pour le pixel Px.

L'écart oblique dxy étant défini comme : $dxy = \sqrt{dx^2 + dy^2}$, l'algorithme s'écrit :

pour j=1 à ny

```
        |     pour i=1 à nx
        |     |     Pict[i,j] = min    Pict[i-1,j] + dx,        : passe descendante
        |     |                        Pict[i-1,j-1] + dxy,
        |     |                        Pict[i,j-1] + dy,
        |     |                        Pict[i+1,j-1] + dxy,
        |     |                        Pict[i,j]
        |     fin de boucle sur i
        fin de boucle sur j
                      pour j=ny à 1,
        |     pour i=1x à 1,
        |     |     Pict[i,j] = minPict[i+1,j] + dx,            : passe descendante
        |     |                      Pict[i+1,j+1] + dxy,
        |     |                      Pict[ij+1] + dy,
        |     |                      Pict[i-1,j+1] + dxy,
        |     |                      Pict[i,j]
        |     fin de boucle sur i
        fin de boucle sur j
```

**Histogramme :** A partir du tableau Pict ainsi calculé, on peut tracer un histogramme en classant les valeurs non nulles (celles affectées aux pixels hors des fissures) par ordre croissant.

Le cumulé de cet histogramme donne, pour toute distance délimitant deux intervalles de l'histogramme, le nombre de pixels non nuls dont la valeur est inférieure à cette distance. Dans l'application décrite à un milieu poreux fissuré où cette distance correspond à l'avancée du front d'eau, le cumulé de l'histogramme indique donc l'aire envahie par l'eau. La courbe R(x) est obtenue en divisant ce cumulé par le nombre total de pixels non nuls (pour le normer). Le nombre d'intervalles utilisés en abscisse pour l'histogramme correspond au nombre de points de discrétisation de la courbe R(x). On le choisit égal à 500 par exemple.

**II-1-c) Recherche des dimensions du bloc équivalent**

A ce stade, on connaît la fonction R(x) et l'on cherche les paramètres $(\overline{a},\overline{b})$ (dimensions du bloc équivalent qui minimisent la fonctionnelle) :

$$J(a,b) = \sum_{i=1}^{N} (R(x_i) - Req - a, b, x_i))^2$$

où N est le nombre de points de discrétisation de R(x) et $(x_i)$ sont les abscisses de ces points de discrétisation.

**Discrétisation suivant l'ordonnée de R(x) :**

Pour donner autant de poids à tous les volumes d'huile récupérés lors de l'imbibition, la courbe R(x) est re-discrétisée suivant un pas constant sur l'axe des ordonnées (Fig. 8). La suite $(x_i)$ utilisée par la fonctionnelle est déduite de cette discrétisation.

**Minimisation de la fonctionnelle :**

Comme a et b jouent des rôles symétriques dans l'expression Req(a,b,x), on utilise en fait la fonctionnelle :

$$\tilde{J}(u,v) = \sum_{i=1}^{N} \left( R(x_i) - R\tilde{e}q(u,v,x_i) \right)^2$$

$$avec \begin{cases} R\tilde{e}q(u,v,x) = u \times x + v \times x^2 \\ R\tilde{e}q(u,v,x) \leq 1 \end{cases} , soit \begin{cases} u = 2 \times \left( \dfrac{1}{a} + \dfrac{1}{b} \right) \\ v = \dfrac{-4}{a \times b} \end{cases}$$

Minimiser cette fonctionnelle revient à trouver le couple $(\overline{u}, \overline{v})$ pour lequel $\tilde{J}'(\overline{u}, \overline{v}) = 0$. Ceci est fait par un algorithme de Newton.
Ensuite, le couple $(\overline{a}, \overline{b})$ recherché est déduit de $(\overline{u}, \overline{v})$. Trois cas peuvent se présenter :

1) $\overline{v} > 0$ signifie qu'une des valeurs du couple $(\overline{a}, \overline{b})$ est négative, ce qui n'a aucun sens physique. On pose alors v=0 dans l'expression de $R\tilde{e}q(u,v,x)$, ce qui implique que les fissures sont parallèles. L'opération est recommencée et le couple $(\overline{a}, \overline{b})$ est calculé comme suit :

$$\begin{cases} a = \dfrac{2}{\overline{u}} \\ \overline{b} \, \inf ini \end{cases}$$

2) Le cas $\overline{u}^2 + 4\overline{v} < 0$ est dépourvu de tout sens physique également puisqu'il signifie que $(\overline{a}, \overline{b})$ ne sont pas réels. On pose alors $u^2 + 4v = 0$, ce qui impose que le bloc élémentaire recherché a la forme d'un carré (a=b). Après minimisation, le couple $(\overline{a}, \overline{b})$ est calculé comme suit :

$$\begin{cases} \overline{a} = \dfrac{4}{u} \\ \overline{b} = \overline{a} \end{cases}$$

3) Pour les autres valeurs du couple $(\bar{u}, \bar{v})$, on a :

$$\begin{cases} \bar{a} = \dfrac{-\bar{u} + \sqrt{\bar{u}^2 + 4\bar{v}}}{\bar{v}} \\ \bar{b} = \dfrac{-\bar{u} - \sqrt{\bar{u}^2 + 4\bar{v}}}{\bar{v}} \end{cases}$$

**II-2 Dimension verticale**

La dimension verticale (c) du bloc équivalent est contrôlée par les niveaux sédimentaires horizontaux, fins et très perméables (Fig.6). Les échanges « matrice-fissure » résultants de ces niveaux sont en effet uniquement verticaux.
Dans chaque maille traversée par au moins un niveau très perméable, la dimension verticale du bloc équivalent est calculée par la formule suivante :

$$c = \frac{\Delta Z}{Ns}$$

où ●Z est l'épaisseur de la maille et Ns est le nombre de niveaux sédimentaires très perméables distincts dans la maille. Par exemple, sur le schéma suivant, Ns vaut 2 :

Pour les mailles dans lesquelles il n'y a pas de niveaux fins très perméables, la hauteur de bloc équivalent est infinie. Pratiquement, on leur affecte aussi une très grande valeur (par exemple 10 km).

**Revendications**

1. Méthode de modélisation permettant de simuler des écoulements de fluides dans un milieu géologique poreux fissuré de structure connue que l'on discrétise par un maillage et que l'on modélise en considérant que chaque volume élémentaire du milieu géologique fissuré est constitué d'un milieu fissure et d'un milieu matrice équivalents à l'échelle de chaque maille entre lesquels on détermine les échanges de fluides, ce milieu géologique étant traversé par un réseau d'objets conducteurs de fluides de géométrie définie mais non homogénéisables à l'échelle de chaque maille du modèle, comportant une détermination des échanges intervenant entre le milieu matrice et le milieu fissure, **caractérisée en ce que** l'on modélise les transmissivités des différentes mailles traversées par chaque objet conducteur, de façon que la transmissivité résultante corresponde à la transmissivité directe le long de cet objet conducteur.

2. Méthode selon la revendication 1, **caractérisée en ce que**, dans le cas où les objets conducteurs sont des couches sédimentaires très perméables, on attribue à la transmissivité entre mailles adjacentes traversées par chaque couche très perméable une valeur dépendant des dimensions des mailles, de l'aire de contact commune entre couches à la jonction des mailles adjacentes et de la perméabilité des couches très perméables.

3. Méthode selon la revendication 1, **caractérisée en ce que**, dans le cas où les objets conducteurs sont des fractures, on attribue à la transmissivité entre mailles adjacentes traversées par chaque fracture, une transmissivité dépendant des dimensions des mailles, de l'épaisseur de la fracture et de sa perméabilité intrinsèque.

4. Méthode selon l'une des revendications précédentes, **caractérisée en ce que** dans les mailles traversées par des objets conducteurs géométriquement définis, on détermine un milieu transposé comportant un ensemble de blocs régulièrement disposés et séparés par un maillage régulier de fissures, ledit milieu transposé donnant sensiblement la même récupération (Req) de fluide lors d'un processus d'imbibition capillaire que le milieu réel, la dimension verticale des blocs du milieu transposé étant déterminée à partir des positions des couches sédimentaires très perméables dans la maille et les dimensions horizontales des blocs de ce milieu transposé étant obtenues, à partir d'une image à deux dimensions (2D) du milieu géologique sous la forme d'une série de pixels, par :

- la détermination, pour chaque pixel, de la distance minimale le séparant de la fissure la plus proche ;
- la formation d'une distribution du nombre de pixels par rapport à la distance minimale au milieu fissuré et la détermination, à partir de cette distribution, de la fonction de récupération (R) dudit ensemble de blocs ; et
- la détermination de dimensions (a,b) des blocs réguliers équivalents du milieu transposé à partir de la récupération (R) et de la récupération (Req) du bloc équivalent.

**Claims**

1. A modelling method enabling the simulation of fluid flows in a fissured porous geological environment of a known structure that is discretised by means of a grid and modelled by considering that each elementary volume of the fissured geological environment is made up of an equivalent fissure environment and matrix environment at the level of each grid cell between which fluid exchanges are determined, this geological environment being crossed by a network of fluid-conducting objects with a defined geometry but which cannot be homogenised at the level of each grid cell of the model, comprising a determination of the exchanges taking place between the matrix environment and the fissure environment, **characterised in that** the transmissivities of the different grid cells crossed by each conducting object are modelled, such that the resulting transmissivity corresponds to the direct transmissivity along this conducting object.

2. The method according to Claim 1, **characterised in that**, when the conducting objects are very permeable sedimentary layers, a value which is dependent on the dimensions of the grid cells, the common contact area between layers at the junction of the adjacent grid cells and the permeability of the very permeable layers is attributed to the transmissivity between adjacent grid cells crossed by each very permeable layer.

3. The method according to Claim 1, **characterised in that**, when the conducting objects are fractures, a transmissivity which is dependent on the dimensions of the grid cells, the thickness of the fracture and its intrinsic permeability is attributed to the transmissivity between adjacent grid cells crossed by each fracture.

4. The method according to one of the preceding claims, **characterised in that**, in the grid cells crossed by geometrically defined conducting objects, a transposed environment comprising a set of regularly arranged blocks separated by a regular grid of fissures is determined, said transposed environment providing substantially the same fluid recovery (Req) during a capillary imbibition process as the real environment, the vertical dimension of the blocks of the transposed environment being determined from the positions of very permeable sedimentary layers in the grid cell and the horizontal dimensions of the blocks of this transposed environment being obtained from a two-dimensional (2D) image of the geological environment in the form of a series of pixels, by:

- determining, for each pixel, the minimum distance separating it from the closest fissure;
- forming a distribution of the number of pixels in relation to the minimum distance to the fissured environment and determining, from this distribution, the recovery function (R) of the said set of blocks; and
- determining dimensions (a, b) of the equivalent regular blocks of the transposed environment from the recovery (R) and from the recovery (Req) of the equivalent block.

**Patentansprüche**

1. Modellierverfahren, das es erlaubt, Fluidströmungen in einer geologischen porigen rissigen Umgebung mit bekannter Struktur zu simulieren, die man durch eine Vermaschung diskretisiert und die man modelliert, indem man davon ausgeht, dass jedes Elementarvolumen der rissigen geologischen Umgebung aus einem Rissmilieu und einem Matrixmilieu besteht, die äquivalent mit dem Maßstab jeder Masche sind, zwischen welchen man die Fluidaustausche bestimmt, wobei diese geologische Umgebung von einem Netz Fluide leitender Objekte mit definierter Geometrie durchquert ist, die aber auf dem Niveau jeder Masche des Modells nicht homogenisiert werden können, das ein Bestimmen der Austausche aufweist, die zwischen dem Matrixmilieu und dem Rissmilieu auftreten, **dadurch gekennzeichnet, dass** man die Durchlässigkeiten der verschiedenen Maschen, die von jedem leitenden Objekt durchquert werden, derart charakterisiert, dass die resultierende Durchlässigkeit der direkten Durchlässigkeit entlang dieses leitenden Objekts entspricht.

2. Verfahren nach Anspruch 1, **dadurch gekennzeichnet, dass** man, in dem Fall, in dem die leitenden Objekte sehr durchlässige Sedimentschichten sind, der Durchlässigkeit zwischen benachbarten Maschen, die von jeder sehr durchlässigen Schicht durchquert werden, einen Wert zuweist, der von den Maßen der Maschen, der gemeinsamen Berührungsfläche zwischen Schichten an dem Übergang zwischen benachbarten Maschen und der Permeabilität der sehr durchlässigen Schichten abhängt.

3. Verfahren nach Anspruch 1, **dadurch gekennzeichnet, dass** man in dem Fall, in dem die leitenden Objekte Brüche sind, der Durchlässigkeit zwischen benachbarten Maschen, die von jedem Bruch durchquert werden, eine Durchlässigkeit zuweist, die von den Dimensionen der Maschen, der Stärke des Bruchs und seiner intrinsischen Permeabilität abhängt.

4. Verfahren nach einem der vorhergehenden Ansprüche, **dadurch gekennzeichnet, dass** man in den Maschen, die von leitenden geometrisch definierten Objekts durchquert sind, ein transponiertes Milieu bestimmt, das eine Einheit regelmäßig angeordneter und von einer regelmäßigen Vermaschung von Rissen getrennter Blöcke aufweist, wobei das transponierte Milieu im Wesentlichen die gleiche Fluidrückgewinnung (Req) bei einem kapillaren Imbibitionsprozess ergibt wie das reale Milieu, wobei das vertikale Maß der Blöcke des transponierten Milieus ausgehend von den Positionen der sehr durchlässigen Sedimentschichten in der Masche bestimmt wird und die senkrechten Maße der Blöcke dieses transponierten Milieus ausgehend von einem zweidimensionalen (2D) Bild des geologischen Milieus in der Form einer Reihe von Bildpunkten erzielt werden, durch:

   - für jeden Bildpunkt, das Bestimmen der Mindestentfernung, die ihn von dem am nächsten liegenden Riss trennt;
   - das Bilden einer Verteilung der Anzahl Bildpunkte in Bezug auf die Mindestentfernung zum rissigen Milieu und, ausgehend von dieser Verteilung, das Bestimmen der Rückgewinnungsfunktion (R) der Einheit Blöcke und
   - das Bestimmen von Maßen (a, b) der äquivalenten regelmäßigen Blöcke des transponierten Milieus ausgehend von der Rückgewinnung (R) und der Rückgewinnung (Req) des äquivalenten Blocks.

## FIG.1

$\delta x$

$Z$

Contacts

$L$

$\delta y$

Maille i   Maille i + 1

## FIG.2

$y$

$\delta X$ (250 m)

$F$

$\delta y$ (250 m)

$x$

## FIG.3

B   C

O   A

## FIG.4

B

b

a

a

A

**FIG.5**

**FIG.6**

**FIG.7**

**FIG.8**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2757947 A
- US 6023656 A
- FR 2757957 A
- FR 9815727
- FR 2757957

**Littérature non-brevet citée dans la description**

- **WARREN ; ROOT.** The Behavior of Naturally Fractured Reservoirs. *SPE Journal,* 1963